# EUROPÄISCHE PATENTSCHRIFT

(11) **EP 1 202 879 B1**
(45) Veröffentlichungstag und Bekanntmachung des Hinweises auf die Patenterteilung: **29.10.2003**
(21) Anmeldenummer: 00954565.8
(22) Anmeldetag: 26.07.2000
(51) Int. Cl.: B60R 21/26, C06C 9/00

(54) **SCHNURGASERZEUGER**
CORD-TYPE GAS GENERATOR
GENERATEUR DE GAZ DU TYPE A CORDEAU

(30) Priorität: 02.08.1999 DE 19936285
(43) Veröffentlichungstag der Anmeldung: 08.05.2002
(73) Patentinhaber: AUTOLIV DEVELOPMENT AB, 447 83 Vargarda (SE)
(72) Erfinder: HERRMANN, Günter, D-83620 Feldkirchen (DE)
(74) Vertreter: Müller, Karl-Ernst, Dr., Dipl.-Ing.
(86) Internationale Anmeldenummer: EP0007129
(87) Internationale Veröffentlichungsnummer: WO01008937

(56) Entgegenhaltungen:
- EP-A- 0 728 630
- WO-A-00/32447
- DE-A- 2 946 422
- DE-A- 3 932 576

## Beschreibung

Die Erfindung betrifft einen Schnurgaserzeuger bestehend aus einem in einer Hülle angeordneten, aus einem gaserzeugenden Material bestehenden Festtreibstoffstrang und aus einem Anzündmittel, wobei der Festtreibstoffstrang in der Hülle derart angeordnet ist, daß zwischen der Hülle und dem Festtreibstoffstrang verlaufende, zur Ausbildung einer Anzündstoßwelle geeignete Kanäle ausgebildet sind.

Ein Schnurgaserzeuger mit den vorgenannten Merkmalen ist in der DE 39 32 576 C2 beschrieben. Der bekannte Schnurgaserzeuger besteht aus einem Festtreibstoffstrang mit einer sternförmigen Anordnung von Einzelsträngen, die von einer Hülle umschlossen sind. Zwischen dem Festtreibstoffstrang und der Hülle sind Kanäle ausgebildet, in denen sich eine bei Zündung des Festtreibstoffstranges einstellende Anzündstoßwelle längs des Schnurgaserzeugers ausbreiten kann. Der aus einer Mischung von Binder, Perchlorat sowie gegebenenfalls Nitrat bestehende Festtreibstoffstrang ist auf seiner Außenseite mit einer als Anzündmittel dienenden Beschichtung aus einem Sprengstoff versehen, der über einen Anzündimpuls gezündet wird. Die sich bei der Verbrennung des Brennstoffes ergebende Anzündstoßwelle sorgt dann für die Zündung des Festtreibstoffstranges über dessen gesamte Länge.

Mit dem bekannten Schnurgaserzeuger ist der Nachteil verbunden, daß der Abbrand des Festtreibstoffes zu langsam verläuft. Ein weiterer Nachteil besteht darin, daß die Sprengstoffbeschichtung des Festtreibstoffstranges den Einsatz des Schnurgaserzeugers im Rahmen von Sicherheitssystemen in Kraftfahrzeugen aus sicherheitstechnischen Gründen erschwert.

Der Erfindung liegt daher die Aufgabe zugrunde, bei einem Schnurgaserzeuger mit den gattungsgemäßen Merkmalen die Abbrandgeschwindigkeit zu vergrößern.

Die Lösung dieser Aufgabe ergibt sich einschließlich vorteilhafter Ausgestaltungen und Weiterbildungen aus dem Inhalt der Patentansprüche, welche dieser Beschreibung nachgestellt sind.

Die Erfindung sieht in ihrem Grundgedanken vor, daß der Festtreibstoffstrang zur Verringerung seiner Abbrandzeit mit einer durch Einbringung von Materiallücken eingestellten verminderten Webstärke versehen ist. Soweit als Webstärke die im Querschnitt des Festtreibstoffstranges bestimmte Materialstärke des kompakten Stranges bestimmt ist, wird eine verminderte Webstärke erfindungsgemäß dadurch eingestellt, daß in dem Festtreibstoffstrang Materiallücken eingebracht sind, die den an sich bekannten kompakten Festtreibstoffstrang auflösen, so daß die Abbrandzeit des Festtreibstoffstranges vermindert ist.

Nach Ausführungsbeispielen der Erfindung werden diese Materiallücken durch die Ausbildung von Poren oder von gesondert eingebrachten Auftrennungen, beispielsweise in Form von Schlitzen hergestellt.

Soweit es aus der gattungsbildenden DE 39 32 576 C2 bekannt ist, daß der Festtreibstoffstrang aus mehreren Einzelarmen zusammengesetzt ist, ist nach einem Ausführungsbeispiel der Erfindung vorgesehen, daß die Einzelarme eine unterschiedliche Webstärke aufweisen oder zusätzlich bzw. alternativ auch eine unterschiedliche Zusammensetzung des Festtreibstoffes aufweisen. Damit kann eingestellt werden, daß der Schnurgaserzeuger in seinen Einzelarmen über eine unterschiedlich lange Zeit Gas erzeugt, so daß beispielsweise beim Einsatz des Schnurgaserzeugers zum Aufblasen eines Gassackes der Gassack einerseits schnell reagiert, gleichwohl aber sanfter aufgeblasen wird.

Dieser Zielsetzung dient auch eine Ausbildung des Festtreibstoffstranges in Form von voneinander getrennten Einzelsträngen, die nach Ausführungsbeispielen der Erfindung einen kreisförmigen oder auch einen ringförmigen Querschnitt aufweisen können. Insbesondere ist auch eine Kombination von unterschiedlichen Querschnitten der in einer Hülle angeordneten Einzelsträngen vorgesehen. Ebenso wie die Einzelarme können auch die Einzelstränge jeweils eine unterschiedliche Webstärke aufweisen oder zusätzlich bzw. alternativ auch eine unterschiedliche Zusammensetzung des Festtreibstoffes aufweisen.

Zur Vermeidung des Sprengstoffeinsatzes ist nach einem Ausführungsbeispiel vorgesehen, daß als Anzündmittel eine pyrotechnische Mischung verwendet wird, die insbesondere auf der Basis von Bor, KNO₃ und Aluminium hergestellt ist. Diese pyrotechnische Mischung kann auf der Außenseite des Festtreibstoffstranges oder alternativ bzw. zusätzlich auf der Innenseite der den Festtreibstoffstrang umschließenden Hülle aufgebracht sein. Je nach der Herstellung bzw. Konsistenz der pyrotechnischen Mischung kann die Mischung auf den Festtreibstoffstrang bzw. die Hülle trocken aufgepudert oder aber als antrocknender Schlamm aufgebracht sein.

Hinsichtlich der Ausbildung der den Festtreibstoffstrang bzw. dessen Einzelstränge umschließenden Hülle kann vorgesehen sein, daß - wie aus der gattungsbildenden DE 39 32 576 C2 an sich bekannt - die Hülle aus einem bei Abbrand des Festtreibstoffstranges mit verbrennenden Material besteht. Alternativ kann vorgesehen sein, daß die Hülle aus einem verstärkten Gewebematerial besteht, welches entweder beim Abbrand des Festtreibstoffstranges aufgrund des entstehenden Gasdruckes aufreißt oder aber zum Durchtritt des beim Abbrand des Festtreibstoffstranges erzeugten Gases vorgesehene Öffnungen aufweist.

In der Zeichnung sind Ausführungsbeispiele der Erfindung wiedergegeben, welche nachstehend beschrieben sind. Es zeigen:
- Fig. 1: einen Schnurgaserzeuger im Querschnitt,
- Fig. 2: den Gegenstand der Figur 1 in einer anderen Ausführungsform,
- Fig. 3: einen Schnurgaserzeuger in einer geschnittenen Seitenansicht,
- Fig. 4: den Gegenstand der Figur 3 im Querschnitt.

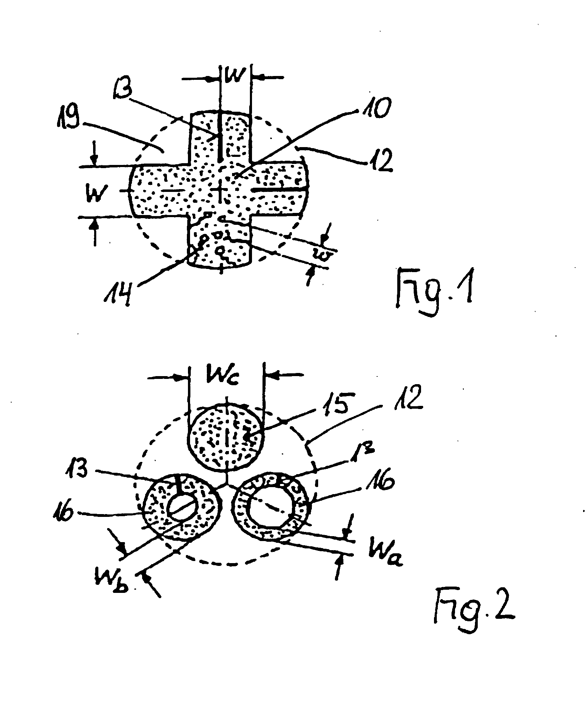

Der in Figur 1 dargestellte Schnurgaserzeuger besteht aus. einem Festtreibstoffstrang 10, welcher vier kreuzförmig angeordnete Einzelarme aufweist. Der Festtreibstoffstrang 10 ist von einer Hülle 12 umschlossen, so daß sich in den zwischen der Hülle 12 und den Armen des Festtreibstoffstranges 10 bestehenden Zwickeln Kanäle 19 ausbilden, in denen sich bei Zündung des Schnurgaserzeugers die über das Anzündmittel erzeugte Anzündstoßwelle ausbreiten kann.

Wie sich aus dem in der Darstellung der Figur 1 nach links ragenden Arm des Festtreibstoffstranges 10 ergibt, ist mit der Webstärke W die im Querschnitt des Stranges 10 bestimmte Materialstärke des kompakten Treibstoffes definiert. In den nach oben bzw. nach rechts abragenden Armen des Festtreibstoffstranges sind jeweils mittig Auftrennungen 13 als Schlitze ausgebildet, so daß die Webstärke W in diesem Fall aufgrund der mittigen Anordnung der Auftrennungen 13 in dem jeweiligen Arm nur die Hälfte der Webstärke W des linken Armes beträgt. Bei dem nach unten abragenden Arm sind die Materiallücken als Poren 14 ausgebildet, wobei die Webstärke W bei diesem Ausführungsbeispiel als der kürzeste Abstand zwischen zwei Poren bestimmt ist.

Bei dem in Figur 2 dargestellten Ausführungsbeispiel sind innerhalb der Hülle 12 drei voneinander getrennte Einzelstränge angeordnet, von denen ein Einzelstrang 15 einen kreisförmigen Querschnitt aufweist, während zwei weitere Einzelstränge 16 jeweils einen ringförmigen Querschnitt mit einer unterschiedlichen Wandstärke des ringförmig angeordneten Festtreibstoffes ausgebildet sind. In diesen Fällen ist die Webstärke W einerseits durch den Durchmesser des Einzelstranges 15 mit dem kreisförmigen Querschnitt bzw. durch die Wandstärken der ringförmigen Einzelstränge 16 definiert. Zusätzlich sind in den beiden ringförmig ausgebildeten Einzelsträngen 16 noch radial angeordnete Auftrennungen 13 vorgesehen.

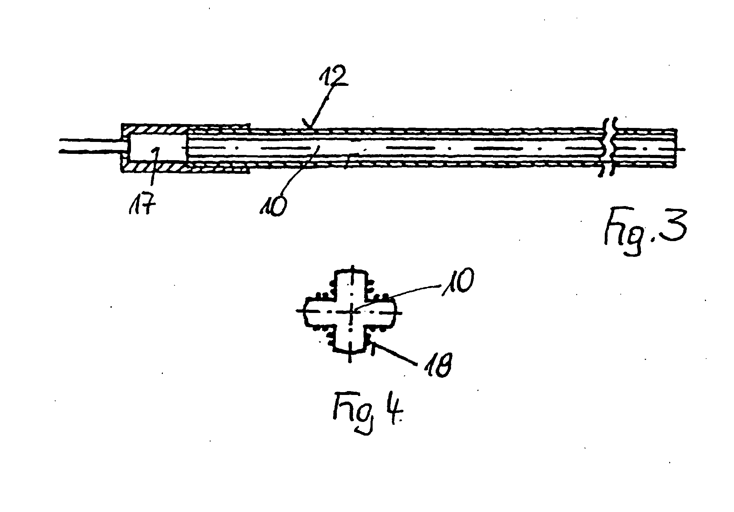

Die Darstellung der Figur 3 zeigt einen entsprechenden Schnurgaserzeuger in einer Seitenansicht, wobei an dem einen Ende des Schnurgaserzeugers ein Initiator 17 angeordnet ist, über den der Anzündimpuls erzeugt bzw. weitergegeben wird. An den Initiator 17 schließt die Hülle 12 an, in deren Innerem der Festtreibstoffstrang 10 angeordnet ist. Wie sich dazu aus Figur 4 entnehmen läßt, weist der Festtreibstoffstrang 10 grundsätzlich die Form des in Figur 1 dargestellten Festtreibstoffstranges auf, wobei auf der Außenseite des Festtreibstoffstranges das Anzündmittel 18 aufgebracht ist.

Dieses Anzündmittel besteht aus einer pyrotechnischen Mischung, die auf der Basis vor Bor, KNO₃ und Aluminium hergestellt ist. Die pyrotechnische Mischung kann trocken aufgepudert oder als antrockenbarer Schlamm aufgebracht werden. Es muß jedoch gewährleistet sein, daß sich im Zusammenwirken mit der vom Initiator 17 ausgelösten und die Kanäle 19 des Schnurgaserzeugers durchlaufenden Stoßwelle ein reaktionsfähiges Staub-, Luft-Gemisch einstellt, welches den langgestreckten Festtreibstoffstrang 10 innerhalb kurzer Zeit über dessen Erstreckung gleichmäßig anzündet. Andererseits darf sich das Anzündmittel 18 jedoch nicht vorzeitig durch Umwelteinflüsse oder Langzeitlagerung des Schnurgaserzeugers lösen und die Ausbreitung der Stoßwelle behindern.

Als Festtreibstoff werden in einer an sich bekannten Weise Komposittreibstoffe eingesetzt, die bei der Öffnung der Hülle 12 aufgrund des entstehenden Gasdruckes auch bei niedrigen Drücken weiterbrennen und nicht durch die plötzliche Druckentlastung verlöschen. Derartige Komposittreibstoffe können beispielsweise aus einer Mischung von Ammoniumperchlorat, Natriumnitrat und einem Kunststoffbinder bestehen, wobei anstelle der Kunststoffbinder zur Minderung der CO-Problematik auch energetische Binder wie beispielsweise Glycidylazid-Polymer (GAP) eingesetzt werden können.

Die in der vorstehenden Beschreibung, den Patentansprüchen, der Zusammenfassung und der Zeichnung offenbarten Merkmale des Gegenstandes dieser Unterlagen können sowohl einzeln als auch in beliebigen Kombinationen untereinander für die Verwirklichung der Erfindung in ihren verschiedenen Ausführungsformen wesentlich sein.

## Patentansprüche

1. Schnurgaserzeuger bestehend aus einem in einer Hülle (12) angeordneten, aus einem gaserzeugenden Material bestehenden Festtreibstoffstrang (10) und aus einem Anzündmittel (18), wobei der Festtreibstoffstrang (10) in der Hülle (12) derart angeordnet ist, daß zwischen der Hülle (12) und dem Festtreibstoffstrang (10) verlaufende, zur Ausbildung einer Anzündstoßwelle geeignete Kanäle (19) ausgebildet sind, **dadurch gekennzeichnet, daß** der Festtreibstoffstrang (10) zur Verringerung seiner Abbrandzeit mit einer durch Einbringung von Materiallücken (13, 14) verminderten Webstärke (W) versehen ist.

2. Schnurgaserzeuger nach Anspruch 1, **dadurch gekennzeichnet, daß** die verminderte Webstärke (W) mittels in dem Festtreibstoffstrang (10) ausgebildeter offener Poren (14) eingestellt ist.

3. Schnurgaserzeuger nach Anspruch 1, **dadurch gekennzeichnet, daß** die verminderte Webstärke (W) mittels in dem Festtreibstoffstrang (10) ausgebildeter Auftrennungen (13) eingestellt ist.

4. Schnurgaserzeuger nach einem der Ansprüche 1 bis 3, wobei der Festtreibstoffstrang aus mehreren Einzelarmen (11) zusammengesetzt ist, **dadurch gekennzeichnet, daß** die Einzelarme (11) eine unterschiedliche Webstärke (W) aufweisen.

5. Schnurgaserzeuger nach Anspruch 4, **dadurch gekennzeichnet, daß** die Einzelarme (11) eine unterschiedliche Zusammensetzung des Festtreibstoffes aufweisen.

6. Schnurgaserzeuger nach Anspruch 4 oder 5, **dadurch gekennzeichnet, daß** der in der Hülle (12) angeordnete Festtreibstoffstrang (10) aus voneinander getrennt angeordneten Einzelsträngen (15, 16) besteht.

7. Schnurgaserzeuger nach Anspruch 6, **dadurch gekennzeichnet, daß** die Einzelstränge (15) einen kreisförmigen Querschnitt aufweisen.

8. Schnurgaserzeuger nach Anspruch 6, **dadurch gekennzeichnet, daß** die Einzelstränge (16) einen ringförmigen Querschnitt aufweisen.

9. Schnurgaserzeuger nach einem der Ansprüche 1 bis 8, **dadurch gekennzeichnet, daß** als Anzündmittel (18) eine pyrotechnische Mischung verwendet wird.

10. Schnurgaserzeuger nach Anspruch 9, **dadurch gekennzeichnet, daß** die pyrotechnische Mischung auf der Basis von Bor, KNO₃ und Aluminium gebildet ist.

11. Schnurgaserzeuger nach Anspruch 9 oder 10, **dadurch gekennzeichnet, daß** die pyrotechnische Mischung (18) auf der Außenseite des Festtreibstoffstranges (10, 11; 15, 16) aufgebracht ist.

12. Schnurgaserzeuger nach einem der Ansprüche 9 bis 11, **dadurch gekennzeichnet, daß** die pyrotechnische Mischung (18) auf der Innenseite der Hülle (12) aufgebracht ist.

13. Schnurgaserzeuger nach einem der Ansprüche 9 bis 12, **dadurch gekennzeichnet, daß** die pyrotechnische Mischung trocken aufgepudert ist.

14. Schnurgaserzeuger nach Anspruch 9 bis 12, **dadurch gekennzeichnet, daß** die pyrotechnische Mischung als antrocknender Schlamm aufgebracht ist.

15. Schnurgaserzeuger nach einem der Ansprüche 1 bis 14, **dadurch gekennzeichnet, daß** die Hülle (12) aus einem beim Abbrand des Festtreibstoffstranges (10, 11; 15, 16) verbrennenden Material besteht.

16. Schnurgaserzeuger nach einem der Ansprüche 1 bis 14, **dadurch gekennzeichnet, daß** die Hülle (12) aus einem verstärkten Gewebematerial besteht.

17. Schnurgaserzeuger nach Anspruch 16, **dadurch gekennzeichnet, daß** die Hülle (12) beim Abbrand des Festtreibstoffstranges (10, 11; 15, 16) aufreißt.

18. Schnurgaserzeuger nach Anspruch 16, **dadurch gekennzeichnet, daß** die Hülle (12) Öffnungen zum Durchtritt des beim Abbrand des Festtreibstoffes (10, 11; 15, 16) erzeugten Gases aufweist.

## Claims

1. Cord-type gas generator comprising a solid propellant strand (10) that is disposed in a sleeve (12) and comprises a gas-generating material, and an ignition means (18), whereby the solid propellant strand (10) is disposed in the sleeve (12) in such a way that channels (19) are formed that extend between the sleeve (12) and the solid propellant strand (10) and that are suitable for the formation of an ignition shock wave, **characterized in that** the solid propellant strand (10), for the reduction of its combustion time, is provided with a reduced woven thickness (W) by introduction of gaps in the material (interruption 13, pores 14).

2. Cord-type gas generator according to claim 1, **characterized in that** the reduced woven thickness (W) is established via open pores (14) formed in the solid propellant strand (10).

3. Cord-type gas generator according to claim 1, **characterized in that** the reduced woven thickness (W) is established via interruptions (13) formed in the solid propellant strand (10).

4. Cord-type gas generator according to one of the claims 1 to 3, whereby the solid propellant strand is composed of a plurality of individual arms (11), **characterized in that** the individual arms (11) have a varying woven thickness (W).

5. Cord-type gas generator according to claim 4, **characterized in that** the individual arms (11) have a different composition of the solid propellant.

6. Cord-type gas generator according to claim 4 or 5, **characterized in that** the solid propellant strand (10), which is disposed in the sleeve (12), is comprised of individual strands (15,16) that are separated from one another.

7. Cord-type gas generator according to claim 6, **characterized in that** the individual strands (15) have a circular cross-section.

8. Cord-type gas generator according to claim 6, **characterized in that** the individual strands (15) have a ring-shaped cross-section.

9. Cord-type gas generator according to one of the claims 1 to 8, **characterized in that** a pyrotechnical mixture is used as the ignition means (18).

10. Cord-type gas generator according to claim 9, **characterized in that** the pyrotechnical mixture is formed on the base of boron, KNO₃ and aluminum.

11. Cord-type gas generator according to claim 9 or 10, **characterized in that** the pyrotechnical mixture (18) is applied to the outer side of the solid propellant strand (10,11; 15,16).

12. Cord-type gas generator according to one of the claims 9 to 11, **characterized in that** the pyrotechnical mixture (18) is applied to the inner side of the sleeve (12).

13. Cord-type gas generator according to one of the claims 9 to 12, **characterized in that** the pyrotechnical mixture is applied as a dry powder.

14. Cord-type gas generator according to claim 9 to 12, **characterized in that** the pyrotechnical mixture is applied as a dryable slurry.

15. Cord-type gas generator according to one of the claims 1 to 14, **characterized in that** the sleeve (12) comprises a material that burns during the combustion of the solid propellant strand (10,11;15,16).

16. Cord-type gas generator according to one of the claims 1 to 14, **characterized in that** the sleeve (12) comprises a reinforced woven material.

17. Cord-type gas generator according to claim 16, **characterized in that** the sleeve (12) rips open during the combustion of the solid propellant strand (10,11;15,16).

18. Cord-type gas generator according to claim 16, **characterized in that** the sleeve (12) is provided with openings for the passage of the gas that is generated during the combustion of the solid propellant (10,11;15,16).

## Revendications

1. Générateur de gaz du type cordeau comprenant un cordon de combustible solide (10) consistant en un matériau générateur de gaz disposé dans une enveloppe (12), et un moyen d'allumage (18), le cordon de combustible solide (10) étant disposé dans l'enveloppe (12) de telle sorte qu'entre l'enveloppe (12) et le cordon de combustible solide (10) s'étendent des canaux (19) appropriés pour la formation d'une onde de détonation, **caractérisé en ce que** le cordon de combustible solide (10) présente, afin de diminuer son temps de combustion, une épaisseur d'âme (W) réduite obtenue en ménageant des perforations dans le matériau (13, 14).

2. Générateur de gaz du type cordeau selon la revendication 1, **caractérisé en ce que** l'épaisseur d'âme (W) réduite est ajustée au moyen de pores (14) ouverts réalisés dans le cordon de combustible solide (10).

3. Générateur de gaz du type cordeau selon la revendication 1, **caractérisé en ce que** l'épaisseur d'âme (W) réduite est ajustée au moyen de séparations (13) réalisées dans le cordon de combustible solide (10).

4. Générateur de gaz du type cordeau selon l'une quelconque des revendications 1 à 3 dans lequel le cordon de combustible solide est composé de plusieurs bras individuels (11), **caractérisé en ce que** les bras individuels (11) présentent une épaisseur d'âme (W) différente.

5. Générateur de gaz du type cordeau selon la revendication 4, **caractérisé en ce que** les bras individuels (11) présentent une composition de combustible solide différente.

6. Générateur de gaz du type cordeau selon la revendication 4 ou 5, **caractérisé en ce que** le cordon de combustible solide (10) disposé dans l'enveloppe (12) se compose de cordons individuels (15, 16) séparés les uns des autres.

7. Générateur de gaz du type cordeau selon la revendication 6, **caractérisé en ce que** les cordons individuels (15) présentent une section transversale circulaire.

8. Générateur de gaz du type cordeau selon la revendication 6, **caractérisé en ce que** les cordons individuels (16) présentent une section transversale annulaire.

9. Générateur de gaz du type cordeau selon l'une quelconque des revendications 1 à 8, **caractérisé en ce qu'**un mélange pyrotechnique est utilisé comme moyen d'allumage (18).

10. Générateur de gaz du type cordeau selon la revendication 9, **caractérisé en ce que** le mélange pyrotechnique est formé sur la base du Bore, du KNO₃ et de l'aluminium.

11. Générateur de gaz du type cordeau selon la revendication 9 ou 10, **caractérisé en ce que** le mélange pyrotechnique (18) est appliqué sur la face extérieure du cordon de combustible solide (10, 11 ; 15, 16).

12. Générateur de gaz du type cordeau selon l'une quelconque des revendications 9 à 11, **caractérisé en ce que** le mélange pyrotechnique (18) est appliqué sur la face intérieure de l'enveloppe (12).

13. Générateur de gaz du type cordeau selon l'une quelconque des revendications 9 à 12, **caractérisé en ce que** le mélange pyrotechnique est saupoudré sous forme sèche.

14. Générateur de gaz du type cordeau selon la revendication 9 à 12, **caractérisé en ce que** le mélange pyrotechnique est appliqué sous forme de boue dessicative.

15. Générateur de gaz du type cordeau selon l'une quelconque des revendications 1 à 14, **caractérisé en ce que** l'enveloppe (12) se compose d'un matériau se consumant lors de la combustion du cordon de combustible solide (10, 11 ; 15, 16).

16. Générateur de gaz du type cordeau selon l'une quelconque des revendications 1 à 14, **caractérisé en ce que** l'enveloppe (12) se compose d'un matériau à tissu renforcé.

17. Générateur de gaz du type cordeau selon la revendication 16, **caractérisé en ce que** l'enveloppe (12) se déchire lors de la combustion du cordon de combustible solide (10, 11 ; 15, 16).

18. Générateur de gaz du type cordeau selon la revendication 16, **caractérisé en ce que** l'enveloppe (12) présente des ouvertures pour le passage du gaz généré lors de la combustion du combustible solide (10, 11 ; 15, 16).
